# EUROPEAN PATENT APPLICATION

(11) **EP 2 157 758 A1**
(43) Date of publication of application: **24.02.2010**
(21) Application number: 09704936.5
(22) Date of filing: 29.04.2009
(51) Int. Cl.: H04L 29/06

(54) **DATA SOFT DELETION, RECOVERY AND SYNCHRONIZATION METHOD, TERMINAL AND SYSTEM THEREOF**

(30) Priority: 16.06.2008 CN 200810099797
(71) Applicant: Huawei Technologies Co., Ltd., Shenzhen, Guangdong 518129 (CN)
(72) Inventor: XIE, Lei, Shenzhen Guangdong 518129 (CN); LI, Kepeng, Shenzhen Guangdong 518129 (CN); CUI, Shouling, Shenzhen Guangdong 518129 (CN); CHAI, Xiaoqian, Shenzhen Guangdong 518129 (CN); WU, Yajuan, Shenzhen Guangdong 518129 (CN)
(74) Representative: Barth, Stephan Manuel
(86) International application number: PCT/CN2009/071563
(87) International publication number: WO 2009/152708

(57) **Abstract**

A method, terminal, and system for soft-deleting, restoring, and synchronizing data are provided. The method for synchronizing data includes: synchronizing, by a server and a terminal, server data not marked as soft-deleted during data synchronization. The method for soft-deleting data includes: receiving, by a server, a soft deletion request from a terminal; and obtaining server data to be soft-deleted according to the soft deletion request and marking the server data as soft-deleted. With the embodiments of the present invention, the server marks the soft-deleted server data as soft-deleted. Thus, the server does not synchronize the soft-deleted server data back to the terminal during normal synchronization or slow synchronization. This avoids confused data management and ensures the normal running of the terminal.

## Description

This application claims priority to Chinese Patent Application No. 200810099797.X, filed with the Chinese Patent Office on June 16, 2008 and entitled "Method, Terminal, and System for Soft-Deleting, Restoring, and Synchronizing Data", which is incorporated herein by reference in its entirety.

### FIELD OF THE INVENTION

The present invention relates to data synchronization technologies, and in particular to, a method, terminal, and system for soft-deleting, restoring, and synchronizing data.

### BACKGROUND OF THE INVENTION

As a standard data synchronization protocol, the Synchronization Markup Language (SyncML) is mainly used in the mobile data synchronization field. When the data in a device changes, the protocol can change the data in other devices accordingly so that the user information in different devices can keep synchronous.

As specified by the prior SyncML protocol, during soft deletion of data, the terminal deletes data but reserves the local unique ID (LUID) of the deleted data, and the server does not delete the data. The terminal may obtain the soft-deleted data again from the server according to the LUID. The server may also actively restore the soft-deleted data to the terminal and reuse the LUID.

In the prior art, after data is soft-deleted, the server does not record the data that is soft-deleted. If the soft-deleted data that is reserved on the server changes or the server synchronizes all the data with the terminal, the soft-deleted data that is not required by the terminal is synchronized back to the terminal again. This causes confused data management and affects the normal running of the terminal.

### SUMMARY OF THE INVENTION

Embodiments of the present invention provide a method, terminal, and system for soft-deleting, restoring, and synchronizing data so that a server does not synchronize soft-deleted data with a terminal during normal data synchronization.

A method for restoring data in an embodiment of the present invention includes:

receiving, by a terminal, server data marked as soft-deleted from a server; and

reserving the server data as terminal data.

A method for synchronizing data in an embodiment of the present invention includes:

synchronizing, by a server and a terminal, server data not marked as soft-deleted during a data synchronization.

A method for soft-deleting data in an embodiment of the present invention includes:

receiving, by a server, a soft deletion request from a terminal; and

obtaining server data to be soft-deleted according to the soft deletion request and marking the server data as soft-deleted.

Another method for soft-deleting data in an embodiment of the present invention includes:

obtaining, by a terminal, a soft-deletion command from a server, where the soft-deletion command carries a LUID of server data marked as soft-deleted on the terminal;

obtaining corresponding terminal data according to the LUID; and

deleting the found terminal data.

A terminal in an embodiment of the present invention includes:

a first terminal module, adapted to receive server data marked as soft-deleted from a server; and

a second terminal module, adapted to reserve the server data received by the first terminal module as terminal data.

A system in an embodiment of the present invention includes a server that can communicate with a terminal, where the server further includes:

a synchronizing unit, adapted to synchronize server data not marked as soft-deleted with the terminal.

With the technical solution of embodiments of the present invention, the server marks the soft-deleted server data as soft-deleted. Thus, the server does not synchronize the soft-deleted server data back to the terminal during normal synchronization or slow synchronization. This avoids confused data management and ensures the normal running of the terminal.

### BRIEF DESCRIPTION OF THE DRAWINGS

FIG. 1 shows a flowchart of a method for soft-deleting data in a first embodiment of the present invention;

FIG. 2A shows information saved in a terminal database according to the method for soft-deleting data in the first embodiment of the present invention;

FIG. 2B shows information saved in a server database according to the method for soft-deleting data in the first embodiment of the present invention;

FIG. 3 shows a flowchart of a method for soft-deleting data in a second embodiment of the present invention;

FIG. 4 shows a flowchart of a method for soft-deleting data in a third embodiment of the present invention;

FIG. 5 shows a flowchart of a method for restoring data in a fourth embodiment of the present invention;

FIG. 6 shows a flowchart of a method for restoring data in a fifth embodiment of the present invention;

FIG. 7 shows a flowchart of a method for restoring data in a sixth embodiment of the present invention;

FIG. 8 shows a flowchart of a method for synchronizing data in a seventh embodiment of the present invention;

FIG. 9A shows information saved in a terminal database of terminal 1 according to the method for synchronizing data in the seventh embodiment of the present invention;

FIG. 9B shows information saved in a terminal database of terminal 2 according to the method for synchronizing data in the seventh embodiment of the present invention;

FIG. 9C shows information saved in a server database according to the method for synchronizing data in the seventh embodiment of the present invention;

FIG. 10 shows a structure of a terminal in an embodiment of the present invention; and

FIG. 11 shows a structure of a system in an embodiment of the present invention.

### DETAILED DESCRIPTION OF THE EMBODIMENTS

Method embodiment 1

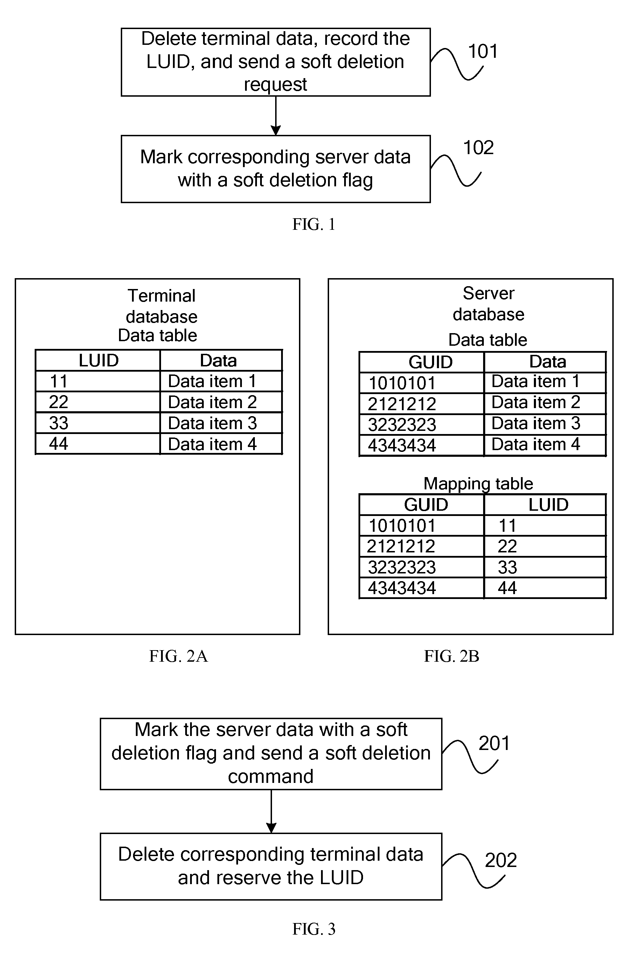

The embodiment provides a method for soft-deleting data. The embodiment describes how a terminal originates soft deletion of data. As shown in FIG. 1, the method includes the following steps:

Step 101: After deleting the terminal data to be soft-deleted, the terminal reserves the LUID of the deleted data and sends a soft deletion request carrying the LUID to the server.

The terminal data indicates the data saved in the terminal. If the Extensible Markup Language (XML) is used for compilation, the step may be implemented as follows:

```
    <Sync>
         <Delete>
           <CmdID>3456</CmdID>
           <SftDel/>
           <Item>
                  <Target><LocURI>./11</LocURI></Target>
           </Item>
         </Delete>
    </Sync>
```

Step 102: After receiving the soft deletion request, the server finds corresponding server data according to the LUID and marks the found server data as soft-deleted.

The server data indicates the data saved in the server. FIG. 2A and FIG. 2B show the information saved in the terminal database and server database respectively. The server may first query for the corresponding global unique ID (GUID) in the mapping table saved in the server database according to the LUID and then find the corresponding server data in the data table according to the GUID. For example, if the received LUID is 22, the GUID found in the mapping table is 2121212. Thus, the data to be soft-deleted in the data table is data item 2.

With the method of the embodiment, the server marks the soft-deleted server data with a flag. Thus, the server does not synchronize the soft-deleted server data back to the terminal during normal synchronization or slow synchronization. This avoids confused data management and ensures the normal running of the terminal.

Method embodiment 2

The embodiment provides another method for soft-deleting data. The embodiment describes how a server originates soft deletion of data. As shown in FIG. 3, the method includes the following steps:

Step 201: The server marks the server data to be deleted as soft-deleted and sends a soft deletion command to the terminal. The soft deletion command carries the LUID of the server data marked as soft-deleted on the terminal. The specific XML codes are as follows:

```
    <Sync>
    <Delete>
      <CmdID>3456</CmdID>
      <SftDel/>
      <Item>
           <Target><LocURI>./11</LocURI></Target>
      </Item>
    </Delete>
    </Sync>
```

Step 202: After receiving the soft deletion command, the terminal finds corresponding terminal data according to the LUID, deletes the found terminal data, and reserves the LUID of the terminal data.

With the method of the embodiment, the server marks the soft-deleted server data with a flag. Thus, the server does not synchronize the soft-deleted server data back to the terminal during normal synchronization or slow synchronization. This avoids confused data management and ensures the normal running of the terminal.

Method embodiment 3

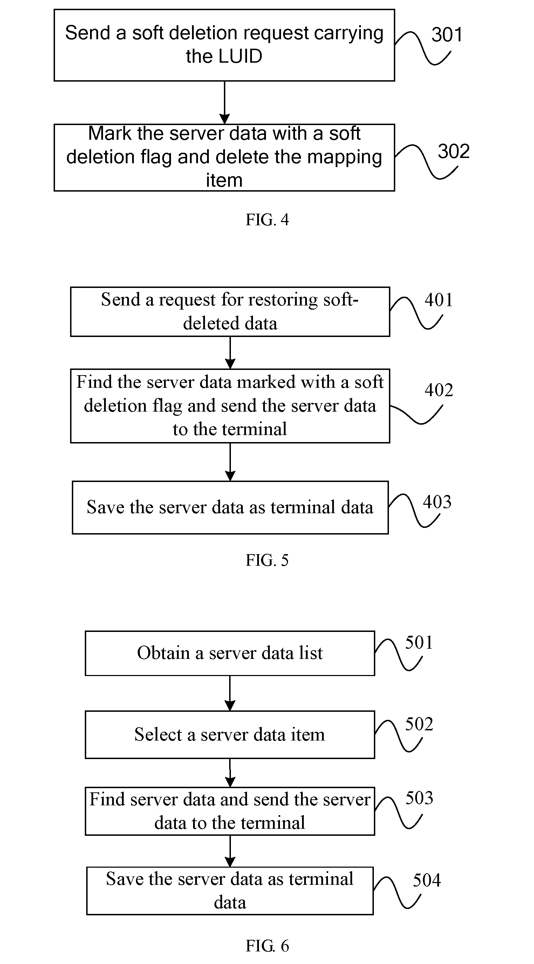

In the first and second embodiments, the terminal needs to reserve the LUID of the soft-deleted data. The third embodiment provides a method for soft-deleting data under the condition that the terminal does not reserve the LUID of the soft-deleted data. As shown in FIG. 4, the method includes the following steps:

Step 301: After deleting terminal data, the terminal sends a soft deletion request carrying the LUID of the deleted terminal data to the server. However, the terminal does not record the LUID, which is different from step 101.

Step 302: After receiving the soft deletion request, the server obtains corresponding server data according to the LUID and marks the obtained server data as soft-deleted, so that the server data is soft-deleted..

Specifically, the server may first find the corresponding GUID in the mapping table saved in the server database according to the LUID and then find the corresponding server data in the data table according to the GUID. The server deletes the mapping item of the LUID from the mapping table after soft-deleting the data, which is different from step 102.

With the method of the embodiment, the terminal may restore soft-deleted data without recording the LUID of the soft-deleted data. In addition to the merits of the methods in the first and second embodiments, the method simplifies terminal operations and makes the soft deletion process selective.

Method embodiment 4

The embodiment provides a method for a terminal to restore soft-deleted terminal data from a server. As shown in FIG. 5, the method includes the following steps:

Step 401: The terminal sends a request for restoring soft-deleted data to the server. The request carries an LUID or a query parameter reserved in step 101. A specific example is as follows:

When the request for restoring soft-deleted data carries an LUID, the request may be a "Get" command or a "Search" command. After receiving the request, the server finds corresponding server data that is soft-deleted according to the LUID and then sends the found server data to the terminal. The carried soft deletion flag may indicate that the terminal data to be obtained is already soft-deleted. In this way, the terminal may more accurately obtain the soft-deleted data.

The method for carrying the soft deletion flag (SftDel) in the "Search" command is similar to that for carrying the soft deletion flag in the "Get" command. The following takes the "Get" command as an example to describe specific XML codes.

```
    <Get>
       <CmdID>3</CmdID>
       <SftDel/><!-flag indicating that the data is soft-deleted -->
       <Item>
            <Filter>
            ........
            <Filter/>
       </Item>
    </Get>
```

Step 402: After receiving the request, the server finds the server data marked as soft-deleted according to the LUID and sends the found server data to the terminal.

Step 403: The terminal saves the received server data as terminal data.

With the embodiment, the terminal actively requests the server to restore soft-deleted data under the condition that the terminal reserves the LUID of the soft-deleted terminal data.

Method embodiment 5

The embodiment provides another method for restoring data. As shown in FIG. 6, the method includes the following steps:

Step 501: The terminal obtains a list of server data marked as soft-deleted from the server.

Specifically, the terminal may use the browser to log in to the website provided by the server to obtain the server data list, or the server actively pushes the server data list to the terminal.

Step 502: The terminal selects the server data item of the server data to be restored from the server data list and sends the selected server data item to the server.

A server data item indicates a data item in the server data list. The server data item may be represented by the GUID of corresponding server data.

Step 503: The server finds corresponding server data according to the server data item and sends the found server data to the terminal.

Step 504: After receiving the server data marked as soft-deleted from the server, the terminal saves the server data as terminal data.

In addition, the terminal that restores the soft-deleted data may also generate a LUID for the saved terminal data and reports the LUID to the server through a mapping command. Then the server creates a corresponding mapping item in the mapping table according to the mapping command. For example, when the request for restoring soft-deleted data does not carry an LUID, the request may be a "Get" command. In the command, the specific XML codes are as follows:

```
    <Get>
       <CmdID>3</CmdID>
       <Item>
            <Filter>
            ........
                        <Field>
                             <Item>
    <Meta><Type> text/x-vcard </Type> </Meta>
                   <Data><![CDATA[
                        <DisplayName>ContactName</DisplayName><!-This is just
 an example. The contact name can be specified.-->
                   ]]></Data>
                            </Item>
                       </Field>
            .......
            <Filter/>
       </Item>
    </Get>
```

Where, a "Filter" element is used to carry a query parameter. Specifically, an "Item Data" element under the "Filter" element carries the query parameter. The query parameter may be the content recorded by the terminal or the content typed by the user. For example, if the soft-deleted data is "vCard", the query parameter may be the name of the contact.

After receiving the "Get" command, the server queries for the qualified data according to the query parameter carried in the "Item Data" element under the "Filter" element and returns the data to the terminal through a "Result" command. The returned data may include the soft deletion flag of the soft-deleted data. After receiving the "Result" command, the terminal may also return a "200 OK" message indicating that the "Result" command is successfully received to the server. This step is optional. After receiving the "200 OK" message, the server deletes the soft deletion flag of the corresponding data according to the soft deletion flag in the "Result" command.

The terminal may report the LUID through a "MapItem" element in the "Map" command when sending the mapping command. After receiving the LUID, the server creates a corresponding mapping item in the mapping table. The XML codes in the "Map" command may be as follows:

```
    <Map>
           <CmdID>1234</CmdID>
           <Target>
           <LocURI>http://www.datasync.org/servlet/syncit</LocURI>
          </Target>
          <Source><LocURI>IMEI:001004FF1234567</LocURI></Source>
          <MapItem>
                 <Target><LocURI> 10536681 </LocURI></Target>
                  <Source><LocURI>./01</LocURI></Source> <!-The LUID is
 carried-->
          </MapItem>
    </Map>
```

With the method of the embodiment, the terminal actively requests the server to restore soft-deleted data under the condition that the terminal does not reserve the LUID of the soft-deleted terminal data.

Method embodiment 6

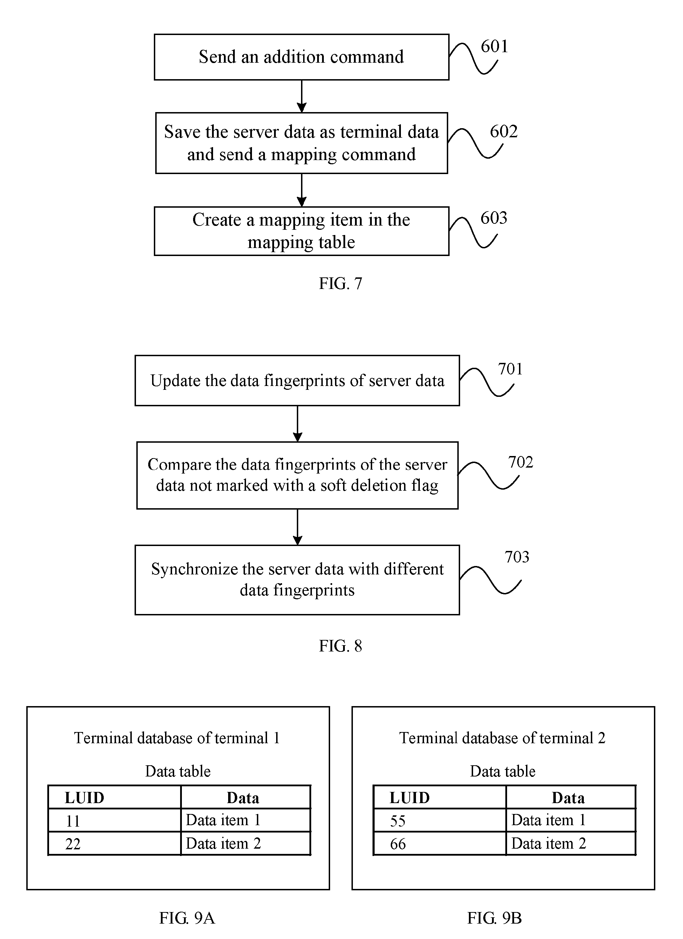

The embodiment provides a method for restoring data. As shown in FIG. 7, the method includes the following steps:

Step 601: The server sends an addition command to the terminal. The addition command carries the server data marked as soft-deleted and the corresponding GUID.

Specifically, the addition command may be an "Add" command and an "Item source" element in the "Add" command carries the GUID of the soft-deleted data. The specific data carried by the "Item Data" element is as follows:

```
    <Sync>
    <Add>
       <CmdID>8</CmdID>
            <Meta><Type xmlns='syncml:metinf'>
    text/x-vcard</Type></Meta>
            <Item>
            <Source><LocURI>536681</LocURI></Source>
    <Data> BEGIN:VCARD
    VERSION:3.0
    FN:Bruce Smith
    N: Smith;Bruce
    TEL;TYPE=WORK;VOICE;MSG:+1-919-555-9999
    END:VCARD
    </Data><!--The vCard data would be placed here.-->
            </Item>
    </Add>
    </Sync>
```

Step 602: The terminal saves the received server data as terminal data, generates an LUID for the terminal data, and reports the generated LUID and the received GUID to the server through a mapping command.

Specifically, the mapping command may be a "Map" command. In the "Map" command, a "MapItem Target LocURI" element carries the GUID and a "MapItem Source LocURI" carries the LUID. The XML codes in the "Map" command are as follows:

```
    <Map>
     <CmdID>1234</CmdID>
     <Target><LocURI>http://www.datasync.org/servlet/syncit</LocURI></Target>
     <Source><LocURI>IMEI:001004FF1234567</LocURI></Source>
     <MapItem>
      <Target><LocURI> 10536681 </LocURI></Target>
      <Source><LocURI>./01</LocURI></Source>
     </MapItem>
    </Map>
```

Step 603: The server creates a corresponding mapping item in the mapping table according to the received mapping command. Thus, the soft-deleted data is restored. For example, the server may use a "Replace" command to deliver the soft-deleted data to the terminal. The "Item Data" in the command carries the soft-deleted data. After receiving the "Replace" command, the terminal restores the soft-deleted data and reuses the LUID of the data. The XML codes are as follows:

```
    <Sync>
    <Replace>
             <CmdID>4567</CmdID>
             <Item>
                 <Target><LocURI>./02 </LocURI></Target>
                 <Source><LocURI>./brucel </LocURI></Source>
                 <Meta>
                                        <Type xmlns='syncml:metinf'>text/directory
 profile=vCard</Type>
                 </Meta>
                 <Data>BEGIN:VCARD
    VERSION:3.0
    FN:Bruce Smith
    N: Smith;Bruce
    TEL;TYPE=WORK;VOICE;MSG:+1-919-555-9999
    END:VCARD
       </Data>
          </Item>
          </Replace>
    </Sync>
```

With the method of the embodiment, the server actively sends the data to be restored to the terminal for data restoration.

Method embodiment 7

The embodiment provides a method for synchronizing data. As shown in FIG. 8, the method includes the following steps:

Step 701: After modifying server data, the server updates the data fingerprint of the server data accordingly.

As a data feature, the data fingerprint can accurately and uniquely identify a data item. That is, the data fingerprint is unique to each data item. A digest algorithm such as the message digest 5 (MD5) algorithm and secure hash algorithm (SHA), a cyclic redundancy check (CRC) algorithm, an ordinary hash algorithm such as the hash algorithm, or a timestamp algorithm such as creating or modifying the timestamp may be used to calculate the data fingerprint according to data contents.

For the data fingerprint of each data item in the databases of the terminal and server, a short string can be obtained through the negotiation between the terminal and the server or the preset data fingerprint algorithm. The string usually contains dozens of bytes and is unique to each data item. The data fingerprint is short. Thus, the data transmission volume when the terminal transmits data fingerprints to the server for verification is far less than that when the terminal sends all the data in the database to the server for data synchronization. Even after the verification, the sum of the data transmission volume in transmitting data fingerprints and the data transmission volume in sending the data that does not pass the verification and needs to be synchronized is less than the data transmission volume in directly sending all the data in the database.

Specifically, in this step, if the data fingerprint is generated by the server, the data fingerprint needs to be recalculated according to the server data content. If the data fingerprint is generated by the terminal and is sent to the server, the data fingerprint may be deleted, reset to invalid, or set to a default value after the server modifies the data.

Step 702: During data synchronization, the server and the terminal compare only the data fingerprints of the server data not marked as soft-deleted.

Step 703: The server synchronizes the server data with different data fingerprints according to the data fingerprint comparison results.

The following describes how terminals 1 and 2 synchronize data with the server.

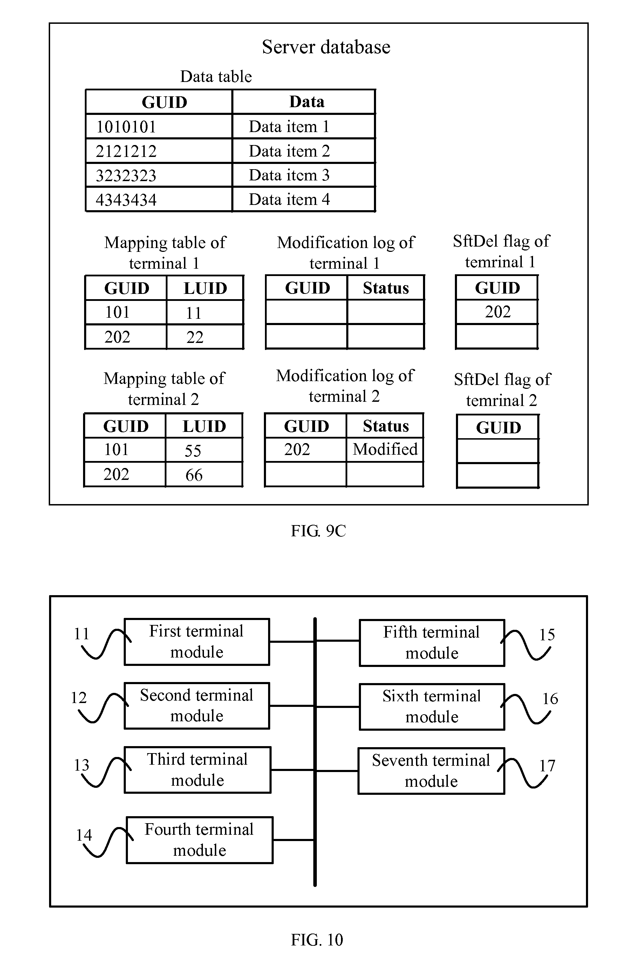

For example, FIG. 9A and FIG. 9B show the information saved in the terminal databases of terminals 1 and 2 respectively. FIG. C shows the information saved in the database of the server. The databases save data tables. In addition, for terminals 1 and 2, the databases save corresponding mapping tables and modification logs.

Suppose that data item 2 of terminal 1 is soft-deleted but the corresponding data of terminal 2 is not soft-deleted. The server records the soft deletion flag of data item 2 of terminal 1. After data item 2 of terminal 2 is modified, a log item is added to the modification log of terminal 2 to record the modification information but no corresponding log item is added to the modification log of terminal 1.

During normal data synchronization between terminal 2 and the server, modified data item 2 is synchronized to terminal 2. During normal data synchronization between terminal 1 and the server, however, modified data item 2 is not synchronized to terminal 1 because the modification information of data item 2 is not recorded to the modification log of terminal 1.

It should be noted that the soft deletion methods in embodiments of the present invention may be implemented according to the Open Mobile Alliance Data Synchronization (OAM DS) technology or other protocols such as the Internet Message Access Protocol (IMAP).

Specifically, during IMAP-based synchronization, the terminal establishes a data connection with the server. The terminal sends a request to the server. The server delivers the modification records since last synchronization to the terminal. That is, the server delivers the modification logs of the server to the terminal. The terminal selectively downloads server data and then sends its data modifications since last synchronization to the server. In this process, the terminal does not download the server data marked as soft-deleted unless the user requires.

The preceding synchronization method may be used in the converged IP messaging (CPM) system or in the converged address book (CAB) system to synchronize messages or address books.

Through the method of the embodiment, during slow synchronization, the data fingerprints of the server data marked as soft-deleted are not compared. That is, the data fingerprints of the soft-deleted data are not compared. In this way, the soft-deleted data is not synchronized back to the terminal. In addition, during normal synchronization, the terminal and server judge the data modification information according to modification logs. In the embodiment, the modification information of the soft-deleted server data is not recorded to the modification log. Thus, the soft-deleted data is not synchronized back to the terminal.

Terminal embodiment

The embodiment provides a terminal. As shown in FIG. 10, the terminal includes a first terminal module 11 and a second terminal module 12. The operating principles are as follows:

The first terminal 11 receives the server data marked as soft-deleted from the server. The second terminal module 12 saves the server data received by the first terminal module 11 as terminal data.

Specifically, multiple modes may be used to receive server data. For example, a third terminal module 13 may be set in the terminal to send a request carrying an LUID or a query parameter to the server to restore soft-deleted data. The first terminal module 11 receives the server data that is marked as soft-deleted and is found by the server according to the request. Or, a fourth terminal module 14 may be set in the terminal to obtain the list of the server data marked as soft-deleted and a fifth terminal module 15 may be set to select server data items to be restored from the obtained server data list and to send the server data items to the server. The first terminal module 11 receives the server data that is marked as soft-deleted and is found by the server according to the request.

In addition, a sixth terminal module 16 and a seventh terminal module 17 may be further set in the terminal. After the second terminal module 12 saves the terminal data, the sixth terminal module 16 generates an LUID for the terminal data saved by the second terminal module 12. Then the seventh terminal module 17 sends the LUID generated by the sixth terminal module 16 to the server through a mapping command. Or, the first terminal module 11 may directly receive an addition command sent from the server. The addition command carries the server data marked as soft-deleted and the corresponding GUID. Then the seventh terminal module 17 reports the LUID generated by the sixth terminal module 16 and the GUID received by the first terminal module 11 to the server through a mapping command.

With the terminal in the embodiment, the soft-deleted server data is restored to the terminal.

System embodiment

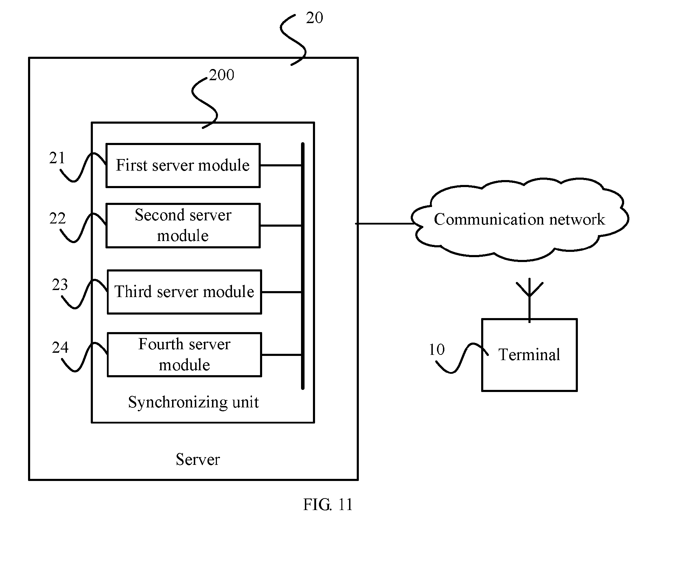

The embodiment provides a system. As shown in FIG. 11, the system includes a server 20 that is connected to a terminal 10 through a communication network. During data synchronization, a synchronizing unit 200 and the terminal 10 in the server 20 synchronize the server data not marked as soft-deleted. The operating principles are as follows:

A first server module 21 in the synchronizing unit 200 marks the server data to be soft-deleted as soft-deleted. Specifically, any method of the first to third method embodiments may be used. That is, the server data is soft-deleted when the terminal 10 originates soft deletion or when the synchronizing unit 200 originates soft deletion. The details are not provided further.

After the server data is modified, a second server module 22 in the synchronizing unit 200 updates the data fingerprint of the modified server data according to the modification information. During data synchronization, a third server module 23 and the terminal compare the data fingerprints of the server data not marked as soft-deleted. Then a fourth server module 24 synchronizes the server data with different data fingerprints according to the comparison result.

With the system of the embodiment, the server marks the soft-deleted server data as soft-deleted. Thus, the server does not synchronize the soft-deleted server data back to the terminal during normal synchronization or slow synchronization. This avoids confused data management and ensures the normal running of the terminal.

It should be noted that the preceding embodiments are used only to describe the technical solution of the invention instead of limiting the invention. Although the embodiments of the invention have been described in detail, those skilled in the art may make various modifications and equivalent substitutions to the invention without departing from the spirit and scope of the invention.

## Claims

1. A method for restoring data, comprising:
obtaining, by a terminal, server data marked as soft-deleted from a server;
reserving the server data as terminal data.

2. The method for restoring data according to claim 1, wherein, obtaining, by a terminal, server data marked as soft-deleted from a server, comprises:
sending a soft-deleted data restoring request which carries a local unique ID, LUID, or a query parameter to the server;
obtaining the server data marked as soft-deleted found by the server according to the soft-deleted data restoring request.

3. The method for restoring data according to claim 1, wherein, obtaining, by a terminal, server data marked as soft-deleted from a server, comprising:
obtaining the server data marked as soft-deleted sent by the server voluntarily.

4. The method for restoring data according to claim 1, wherein, obtaining, by a terminal, server data marked as soft-deleted from a server, comprises:
obtaining a server data list marked as soft-deleted from the server;
sending server data item of the server data to be restored chosen from the server data list to the server;
obtaining server data marked as soft-deleted that sent by the server according to the server data item.

5. The method for restoring data according to claim 3 or 4, after reserving the server data as terminal data, further comprising:
generating, by the terminal, a LUID for the reserved terminal data; and reporting the LUID to the server through a mapping command for the server to create a corresponding mapping item in the mapping table.

6. The method for restoring data according to claim 1, wherein, obtaining, by a terminal, server data marked as soft-deleted from a server, comprises:
obtaining from the server an addition command which carries the server data marked as soft-deleted and a corresponding global unique ID,GUID.

7. The method for restoring data according to claim 6, after reserving the server data as terminal data, further comprising:
generating, by the terminal, a LUID for the reserved terminal data; and reporting the LUID to the server through a mapping command for the server to create a corresponding mapping item in the mapping table.

8. A method for synchronizing data, comprising:
synchronizing, by a server and a terminal, server data not marked as soft-deleted during a data synchronization process.

9. The method for synchronizing data according to claim 8, wherein, before synchronizing, by a server and a terminal, server data not marked as soft-deleted, further comprising:
updating, by a server, data fingerprints of the modified server data after modifying the server data accordingly;
wherein, synchronizing, by a server and a terminal, server data not marked as soft-deleted, comprises:
comparing, by the server and the terminal, the data fingerprints of the server data not marked as soft-deleted;
synchronizing the server data with different data fingerprints.

10. The method for synchronizing data according to claim 8, wherein, before synchronizing, by a server and a terminal, server data not marked as soft-deleted, further comprising:
marking, by the server, the server data to be soft-deleted as soft-deleted.

11. A method for soft-deleting data, comprising:
obtaining, by a server, a soft-deletion request from a terminal;
obtaining server data to be soft-deleted according to the soft-deletion request; and marking the server data as soft-deleted.

12. The method for soft-deleting data according to claim 11, wherein the soft-deletion request carries the LUID of deleted data;
wherein, marking, the server data as soft-deleted, further comprises:
obtaining the corresponding server data according to the LUID of deleted data carried in the soft-deletion request; and
marking the obtained server data as soft-deleted.

13. The method for soft-deleting data according to claim 11, after marking, the server data as soft-deleted, further comprising:
deleting the mapping item of the LUID from the mapping table.

14. A method for soft-deleting data, comprising:
obtaining, by a terminal, a soft-deletion command from a server, wherein the soft-deletion command carries a LUID of server data marked as soft-deleted on the terminal;
obtaining the corresponding terminal data according to the LUID; and
deleting the obtained terminal data.

15. The method for soft-deleting data according to claim 14, after deleting, the obtained terminal data, further comprising:
reserving the LUID of the deleted data.

16. A terminal, comprising:
a first terminal module, adapted to receive server data marked as soft-deleted from a server;
a second terminal module, adapted to reserve the server data received by the first terminal module as terminal data.

17. The terminal according to claim 16, further comprising:
a third terminal module, adapted to send a soft-deleted data restoring request carrying a LUID or a query parameter to the server ; and
the first terminal module, adapted to receive the server data marked with the soft deletion flag, which is found by the server according to the restore soft-deleted data request.

18. The terminal according to claim 16, further comprising:
a fourth terminal module , adapted to obtain the server data list marked with soft deletion flag;
a fifth terminal module, adapted to select server data items to be restored from the server data list obtained by the fourth terminal module and send the server data items to the server; and
the first terminal module, adapted to obtain the server data marked with the soft deletion flag sent by the server according to the server data items.

19. The terminal according to claim 16, further comprising:
a sixth terminal module, adapted to generate a LUID for the terminal data reserved by the second terminal module; and
a seventh terminal module, adapted to send the LUID generated by the sixth terminal module to the server through a mapping command.

20. The terminal according to claim 16, further comprising:
the first terminal module, adapted to receive an addition command from the server, which carries the server data marked with the soft deletion flag and a corresponding GUID; and
a seventh terminal module, adapted to report the LUID generated by the sixth terminal module and the GUID received by the first terminal module to the server through the mapping command.

21. A system, comprising a server that communicates with a terminal, wherein the server comprises:
a synchronizing unit, adapted to synchronize server data not marked as soft-deleted with the terminal during a data synchronization process.

22. The system according to claim 21, wherein the synchronizing unit further comprises:
a first server module, adapted to mark the server data to be soft-deleted as soft-deleted;
a second server module, adapted to update data fingerprints of the modified server data according to the modification information after the server data is modified;
a third server module, adapted to compare the data fingerprints of the server data not marked as soft-deleted the terminal during a data synchronization process;
a fourth server module, adapted to synchronize the server data with different data fingerprints.
